# EUROPEAN PATENT APPLICATION

(11) **EP 4 098 410 A1**
(43) Date of publication of application: **07.12.2022**
(21) Application number: 21177788.3
(22) Date of filing: 04.06.2021
(51) Int. Cl.: B25J 11/00, B25J 15/00, B25J 15/02

(54) **A GRIPPER AND A METHOD OF USING A ROBOT WITH THE GRIPPER**

(71) Applicant: Marel A/S, 8200 Arhus N (DK)
(72) Inventor: DALGAARD, Jens Kongensholm, 8200 Århus N (DK)
(74) Representative: Inspicos P/S

(57) **Abstract**

A gripper (1) for gripping an item (2), particularly a plate shaped item. The gripper (1) comprises a base (4), and a first jaw member (5) and a second jaw member (6) movable to grip the item. To ensure precise gripping, particularly relative to plate shaped items, the gripper comprises a scraper attached to each jaw member and capable of scraping along the support surface where the item is lifted from.

## Description

### INTRODUCTION

The present disclosure relates to a gripper for gripping items and a method for picking up and re-positioning an item carried by a support surface. Particularly, the disclosure is concerned with picking up plate shaped elements, e.g. plates of cardboard carrying food such as salmon slices.

More specifically, the disclosure relates to a gripper comprising:
- a base,
- a first jaw member and a second jaw member.

Each jaw member defines a forward edge extending towards the forward edge of the other jaw member and at least one jaw member is movable relative to the other jaw member to define an open jaw position and a closed jaw position.

The forward edges are closer to each other in the closed jaw position than in the open jaw position such that the jaw members can cooperate to grip the item.

### BACKGROUND

Grippers of the above stated kind are used inter alia in food processing industries for handling food products such as meat.

WO2007093774 discloses a pick and place device for picking up and re-positioning an article carried by a support surface.

Although this pick and place device shows significant advantages over prior art grippers it may be desired to facilitate precise delivery of the items, and particularly to allow precise arrangement of items in a specific location. The disclosed device may not be optimal for handling thin, plate shaped elements such as cardboard plates carrying sliced food, e.g. slices of smoked salmon etc.

Particularly, it may be difficult, by use of existing pick and place devices to pick up thin plates, e.g. made of cardboard etc. It may further be difficult to obtain a strong grip enabling fast movement, e.g. with a robot. It may further be difficult to grip items e.g. from a support surface having a surface pattern of projecting elements, e.g. a modular belt for a food conveyor. It may further be difficult to release the item in a precise and fast manner.

### SUMMARY

On the above background it is an object of embodiments of the disclosure to provide an improved gripper, and particularly a gripper facilitating better gripping of thin plates. It is a further object to facilitate a higher throughput by enabling faster movement and gripping, and handing by use of a robot, and to protect items being handled by the gripper. It is a further object to reduce the risk of contamination of food items being handled.

According to these and other objects, a gripper is provided in a first aspect. The gripper comprises a base, a first jaw member, and a second jaw member.

The jaw members define a shaft portion and a foot portion. The shaft portion extends in an upright direction between the base and the foot portion, and the foot portion extends laterally from the shaft portion in an inwards direction towards the foot portion of the other jaw member.

The foot portion defines an upper surface towards the base and an opposite lower surface facing away from the base and typically facing a surface from which the item is being gripped.

The upper and lower surfaces terminate in a forward edge, and at least one, and typically both jaw members are movable relative to each other to define an open jaw position and a closed jaw position, wherein the forward edges are closer to each other in the closed jaw position than in the open jaw position.

To improve the ability to catch thin items such as cardboard plates, the gripper comprises a scraper attached to each of the first and second jaw members.

The scraper is attached to the shaft portion at a scraper interface and defines a lateral section extending partly along the upper surface of the foot portion and defining a leading edge in front of the forward edge. The forward edge is thereby located between the shaft portion and the leading edge when considered in the inwards direction.

In use, the gripper is particularly for gripping items on a horizontal support surface. By definition herein, the gripper is attachable to a robot at a robot interface. In use, this interface is typically vertically above the forward edges of the jaw members. For defining elements of the gripper, a vertical center plane is introduced extending from the robot interface through a point centrally between the forward edges of the jaw members.

The upright direction is herein defined as any direction having a vertical component in this plane, i.e. not necessarily a vertical direction but a direction which can be projected onto the vertical center-plane and defines a component therein.

The gripper may particularly be configured and used for food processing. It may e.g. be made from material accepted for food processing, examples of which include anti corrosive steel materials and polymer materials such as POM, PA, PETG, PEHD, or Teflon etc. The gripper may particularly be configured for operation in combination with a robot. The gripper may operate for picking up and re-positioning items. Particularly, the gripper may be used to reposition blanks of a plate shaped material, e.g. cardboard carrying e.g. fish such as salmon etc.

The gripper may grip the item from a support surface, e.g. a surface of a conveyor belt, and the gripper may be used to grip the items while they are moved by the support surface.

The base may form an interface towards a robot such that the gripper can be moved according to a programmed path e.g. based on vision systems detecting the location of the item to be gripped. The interface may e.g. form a releasable fixation to the robot, e.g. a fixation which can be controlled by pressurized air or other forms of actuators allowing the robot to exchange gripper.

The base may further hold components for controlling the gripper, e.g. pneumatic valves, and cylinders for actuating the opening and closing of the jaw members or electric actuators for that purpose. The base may further hold various sensors for sensing the position of the jaw members, pinching structures or for other purposes. It may further comprise camera means for capturing image(s) of the item being gripped and of a location such as a plate or box where the item is to be positioned. Additionally, the base may comprise fixation and bearings for holding the jaw members and other elements of the gripper, e.g. guards which are described later.

The shaft portion and a foot portion may be formed as two distinct elements which are joined, or they could be formed in one piece.

The foot portion and the shaft portion may extend e.g. 30-120 degrees to each other, e.g. between 75 and 100 degrees to each other, e.g. perpendicular to each other.

The scraper may define an upright section extending in the upright direction from the interface to the lateral section. The distance between the interface and foot may e.g. be in the range of the length of the foot such that the scraper defines essentially equal length of the upright section and the lateral section.

The scraper may be movable relative to the foot portion, e.g. slidable against the forward edge of the foot portion. Due to the movability of the scraper relative to the foot portion, the scraper can adjust for inaccuracies in the positioning of gripper relative to the support surface from which the item is gripped. During gripping, the robot may be moved to a fixed programmed position, being a position where the scraper reaches the support surface and is lifted in a direction away from the upper surface of the foot portion.

Further, the movability supports the ability of the scraper to actually scrape along the support surface.

The sliding of the scraper may occur during deflection of the upright section, particularly such that the lateral section slides back and forth in contact with the upper surface of the foot portion while the upright section bends towards or away from the shaft portion of the jaw member to which it is attached. This deflection may cause an elastic deformation of the scraper which may again create a spring effect in the scraper which urges the scraper back towards the initial position.

The lateral section may define an inward section extending in the inwards direction above the upper surface of the foot and slidable against the upper surface of the foot. The lateral section may further define a downward section extending from the inward section to the leading edge. This section tapers down towards the support surface and allows the scraper to scrape underneath the item being gripped.

The leading edge may be below the lower surface of the foot when viewed in a projection onto a vertical plane. When the gripper is moved vertically downwards towards the support surface, the leading edge will reach the support surface before the forward edges or the lower surface of the foot of the jaw member reach the support surface.

The inward section and the downward section may interface in a bend portion. In this embodiment, the scraper is e.g. made in one piece e.g. from a blank of a sheet material, e.g. an elastically deformable metal plate, particularly a thin sheet, e.g. less than 1 mm. thick sheet of metal.

The entire scraper may particularly be made in one piece, e.g. from a blank of a sheet material, e.g. an elastically deformable metal plate. This sheet may be bend between the upright section and the lateral section and be bend between the inward section and the downward section.

The forward edge of the jaw members may be a part of the foot portion, and it may be relatively sharp, preferably with a thickness less than 1 cm. such as less than 2 mm. This facilitates the sliding of the foot portion under the item, i.e. between the support surface and the item. It may be formed by a material which is stronger or more wear resistant than the remaining part of the jaw member. In one embodiment, the entire jaw member(s) is formed in one piece from one material, e.g. a polymer material. The forward edge could be made from steel.

The forward edge may be arranged to move the leading edge in the upright direction in response to the sliding of the downward section against the forward edge, i.e. the forward edge may lift the leading edge upwards away from the support surface when the scraper slides along the upper surface of the foot portion of the jaw member to which it is attached. The lifting of the leading edge may e.g. facilitate release of the scraper from projecting elements on the support surface and may facilitate use of the gripper e.g. in combination with anti-slip surfaces or in combination with module belts having a surface pattern of projecting elements. Such surfaces are known e.g. from conveyor belts for food processing.

The gripper may comprise a guard structure comprising a first guard and a second guard extending in the upright direction between a free end and the base.

Each guard forms a contact surface facing a contact surface of the other guard, and the jaw members are arranged, in response to movement to the closed jaw position, to lift the item in the upright direction to a position located between the contact surfaces of the guards. The lifting may be caused by a tapered or inclined surface of the foot portion and scraper.

Each jaw member defines an inner surface facing an inner surface of the other jaw member. When lifting an item, it may be squeezed between, or at least be in contact with these inner surfaces. To ensure swift and precise release of the item from the jaw members, the jaw members and guards may be arranged such that the inner surfaces are located on one side of the contact surface in the closed jaw position and on an opposite side of the contact surface in the open position.

Accordingly, when the jaw members move from the open jaw position to the closed jaw position, the inner surfaces move from a distal position where a distance between the inner surfaces exceeds a distance between the contact faces, to a proximal position where the distance between the contact faces exceeds the distance between the inner surfaces.

In the distal position, the inner surfaces are further away from the vertical center plane than the contact surfaces, and in the proximal position, the contact surfaces are further away from the vertical center plane than the inner surfaces.

Since the jaw members are movable to bring the inner surfaces reversely between opposite sides of the contact surface of the guards, the item may contact the contact surface of the guard during movement of the jaw members to the open position and the item will thus be released from the jaw members. At this point, the item is in a well-known position with one edge against the contact surface, and repeated delivery at the same location or precise predefined delivery positions can be obtained. In one example, the item could be a plate which is delivered in a pocket defined by a vacuum formed sheet. Since such pockets narrowly surrounds the cardboard, it is important that the delivery position is precise.

The guards may particularly be used in combination with cardboard plates for preventing such plates from sliding out between the jaw members. The contact surfaces may contact edges of the plates and thereby prevent the sliding with no direct contact with food items which are arranged on the plates and the guards may therefore prevent cross-contamination between food items handled by the gripper.

In a second aspect, the disclosure provides a robot comprising a gripper according to the first aspect, and in a third aspect, the disclosure provides a method of moving an item by use of a robot comprising the gripper. The robot may be programmed to move to a fixed pickup location where the item is to be picked up from a support surface. At this pickup location, only the scraper reaches the support surface and the foot portion is above the support surface. Since the scraper reaches the support surface, it may be deflected away from the upper surface of the foot portion upon the contact with the support surface. The movability of the scraper relative to the foot portion thereby compensates for inaccuracies in the position of the support surface or in the robot etc.

The method comprises moving at least one of the jaw members relative to the other jaw member to the open jaw position. Moving the gripper to a position where the item is located between the leading edges. Moving the jaw members towards the closed jaw position until the item is pinched between the leading edges or the leading edges moves below the item to thereby lift the item by the scraper and the foot portions of the jaw members. Subsequently, the gripper is used for moving the item by use of the robot.

The gripper, and the robot with the gripper may particularly be used for gripping cardboard plates. The cardboard plate defines an edge extending about a lower surface and an opposite upper surface, and the upper surface carries food items. Such food items could be poultry, fish, or meat and particularly slices of food items e.g. slices of salmon.

Due to the structure of the jaw members with the scraper, and the optional guards, the gripper may be in contact with the lower surface and the edge, but not with the upper surface and the food items. The jaw members and optional guards may particularly prevent sliding of the plates between the jaws by contact between edges of the plates and thereby prevent cross-contamination.

The robot and method according to the second and third aspects may include any feature implicit in view of the description of the gripper according to the first aspect.

### BRIEF DESCRIPTION OF DRAWINGS

Embodiments will be described, by way of example only, with reference to the drawings, in which
Figs. 1 and 2 illustrate a gripper for picking up and re-positioning an item,
Figs. 3-4 illustrate the gripper with a scraper,
Figs. 5-6 illustrate the gripper with a scraper and without an optional guard,
Fig. 7 illustrates the gripper in a closed position of the jaw members,
Fig. 8 illustrate one single jaw member,
Fig. 9 illustrates one single guard member,
Figs. 10-12 illustrate lifting of a leading edge of a scraper by movement against a forward edge of the foot portion of the jaw member.
Figs. 13-14 illustrates details of a connection between a guard and a jaw member and an actuator for moving the jaw members,
Figs. 15 and 16 illustrate a gripper with corner fitting elements forming the guards;
Fig. 17 illustrates a production line with a robot with a gripper, and
Fig. 18 illustrates a robot with a gripper.

### DETAILED DESCRIPTION OF EMBODIMENTS

The detailed description and specific examples, while indicating embodiments of the disclosure, are given by way of illustration only, since various changes and modifications within the spirit and scope of the disclosure will become apparent to those skilled in the art from this detailed description.

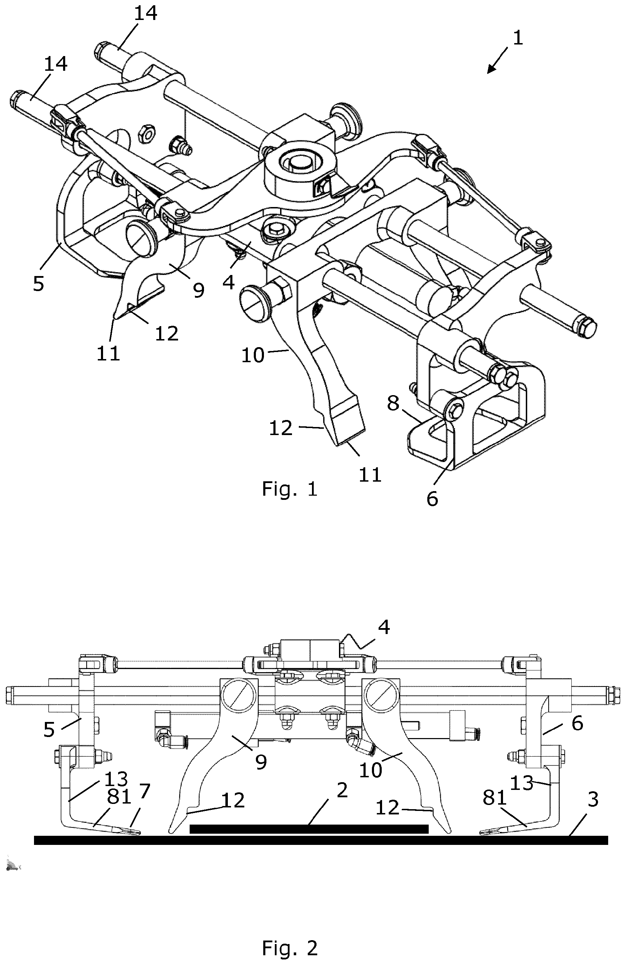

Figs. 1 and 2. illustrate a gripper 1 for picking up and re-positioning an item 2 carried by a support surface 3. In Fig. 1, the gripper is illustrated in a perspective view and in Fig. 2 in a sideview. The support surface may particularly be a surface of a conveyor belt, and the gripper could be mounted on a robot for moving items to and/or from the conveyor belt such as from the conveyor belt to boxes or plates. The gripper may particularly be used for handling food items such as meat, e.g. pieces of fish such as pieces of salmon etc. arranged on a plate. The plate 2 is illustrated empty, but it could carry e.g. salmon slices.

To facilitate cleaning, the gripper could be made of non-corrosive materials which can be cleaned with water, e.g. anti-corrosive steel, or polymer materials such as POM, PA, PETG, PEHD, or Teflon etc., or other types of rigid plastic materials.

The gripper 1 comprises a base 4 forming an interface 15 for connection to a robot (not shown) and holding various components, including e.g. air supply for actuators for opening and closing the gripper and a bearing structure for the jaw members and guards.

The jaw structure of the gripper comprises a first jaw member 5 and a second jaw member 6.

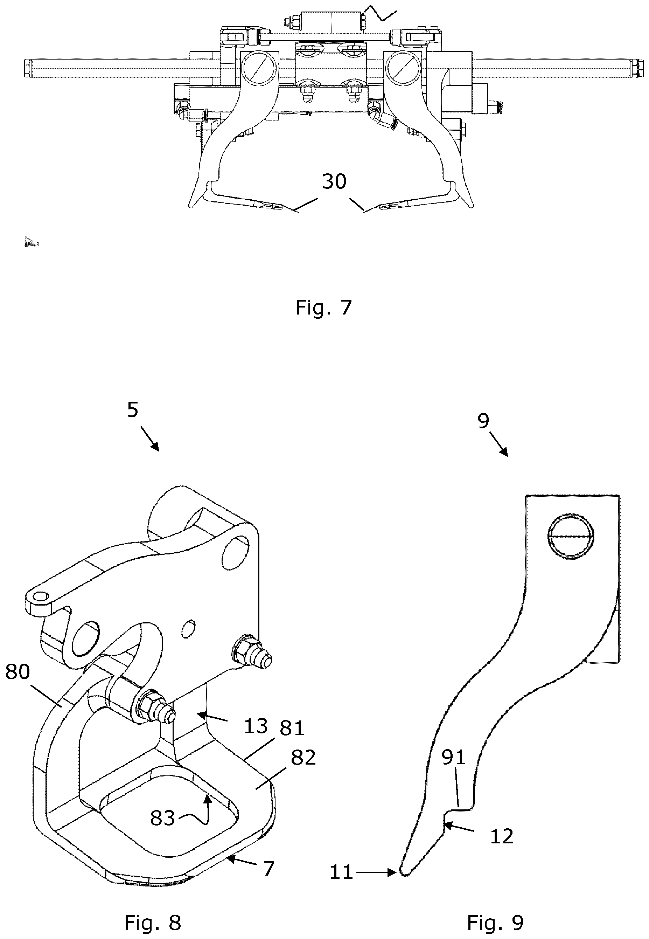

Each jaw member defines a forward edge 7, 8 extending towards the forward edge of the other jaw member and the jaw members are movable relative to each other between an open jaw position and a closed jaw position. Figs. 1-6 illustrate the gripper in an open jaw position, and Fig. 7 illustrates the gripper in the closed jaw position wherein the forward edges 7, 8 are closer to each other.

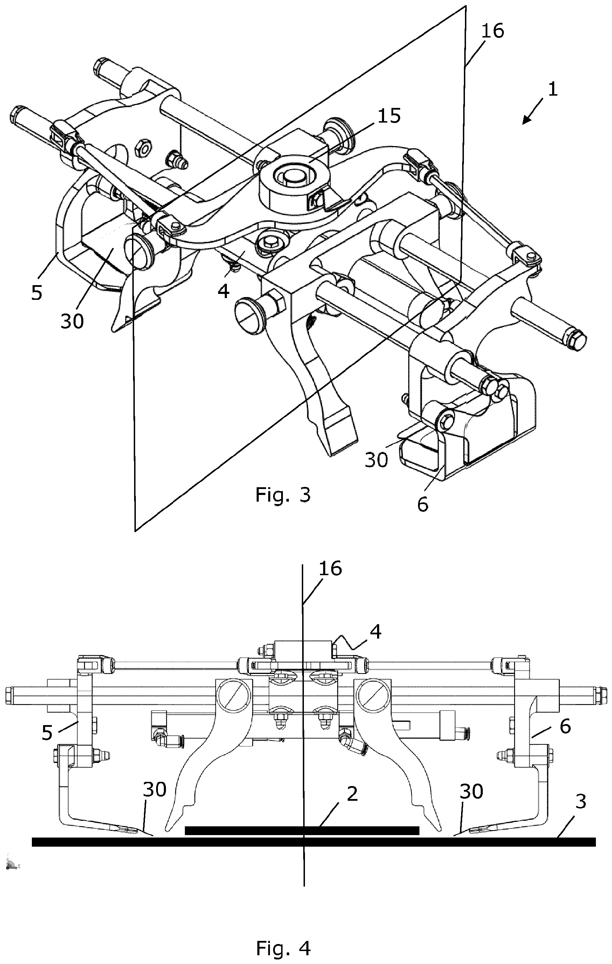

For defining what is herein referred to as an upright direction, Figs. 3 and 4 illustrates a vertical center plane 16. This center plane is virtual, i.e. only drawn for defining an upright direction. The vertical center plane extends from the robot interface 15 through a point centrally between the forward edges of the jaw members.

A direction is herein referred to as "upright direction" if it has a component when projected onto this plane, i.e. an upright direction is not necessarily a vertical direction but a direction which can be projected onto the vertical center-plane and defines a component therein.

The embodiment of the gripper illustrated in Figs. 1-4 comprises an optional guard structure with a first guard 9 and a second guard 10. The guards extend in an upright direction between a free end 11 and the base. At the base, the guards are attached in a manner allowing variable distance between the guards.

Each guard forms a contact surface 12. One of the guards is illustrated individually in Fig. 9. The contact surface 12 is configured for contact with the item, and particularly for contact with a thin, plate shaped element which is lifted by the jaw members to a position where it is between the guards.

An inner surface 13 of the jaw member is located on one side of the contact surface in the closed jaw position and on an opposite side of the contact surface in the open position. This is illustrated by the difference between the open jaw position in Figs. 1-4 and the closed jaw position in Fig. 7.

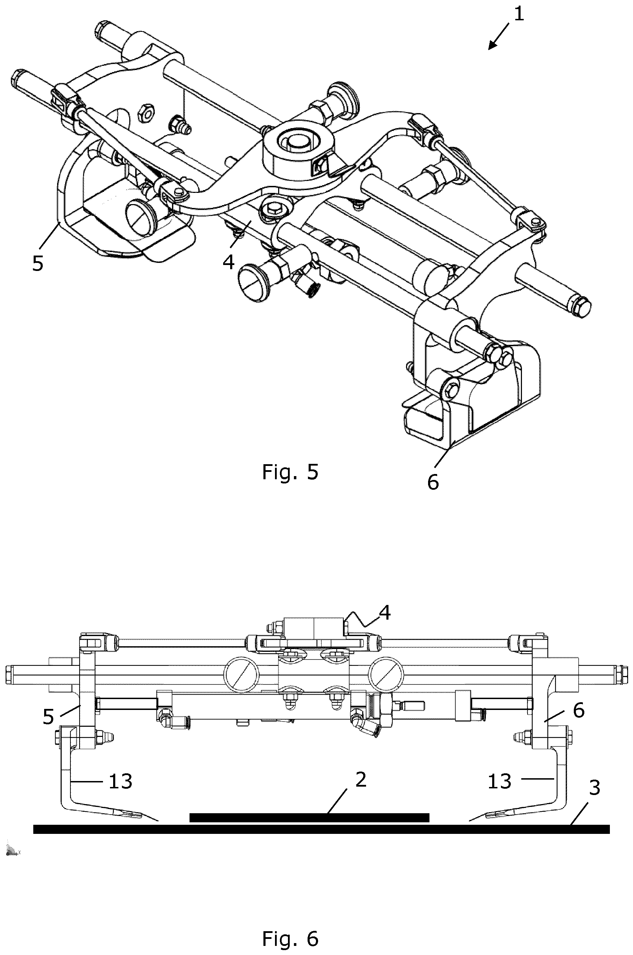

Figs. 5-6 illustrate the gripper without the optional guard structure.

The jaw members are movable in a linear movement along a linear bearing structure, in the specific embodiments of Figs. 1-7 constituted by the two linear bearings 14.

The embodiments illustrated in Figs. 3-7 are provided with a scraper 30 attached to each of the first and second jaw members. The scraper is attached to the shaft portion by bolts 103 forming a scraper interface.

The jaw members are illustrated separately in Fig. 8. Each jaw member defines a shaft portion 80 and a foot portion 81. The shaft portion extends in an upright direction between the base 4 and the foot portion 81.

The foot portion extends laterally from the shaft portion, i.e. in an inwards direction towards the foot portion of the other jaw member. The foot portion defines an upper surface 82 facing towards the base and an opposite lower surface 83 facing downwards and away from the base. In use, the lower surface faces the surface supporting the item which is gripped.

Fig. 9 illustrates details of the optional guards. Each guard defines a contact surface 12 which extends in an upright direction. The contact surface is followed by a lateral contact section 91 extending laterally from the contact surface. The lateral contact section may extend perpendicular to the contact surface.

The upper surface 82 of the foot portion may face towards the lateral contact section 91. In one embodiment, the dimension may be such that a plate which is to be gripped, can be pinched between the upper surface 82 and the lateral contact section 91.

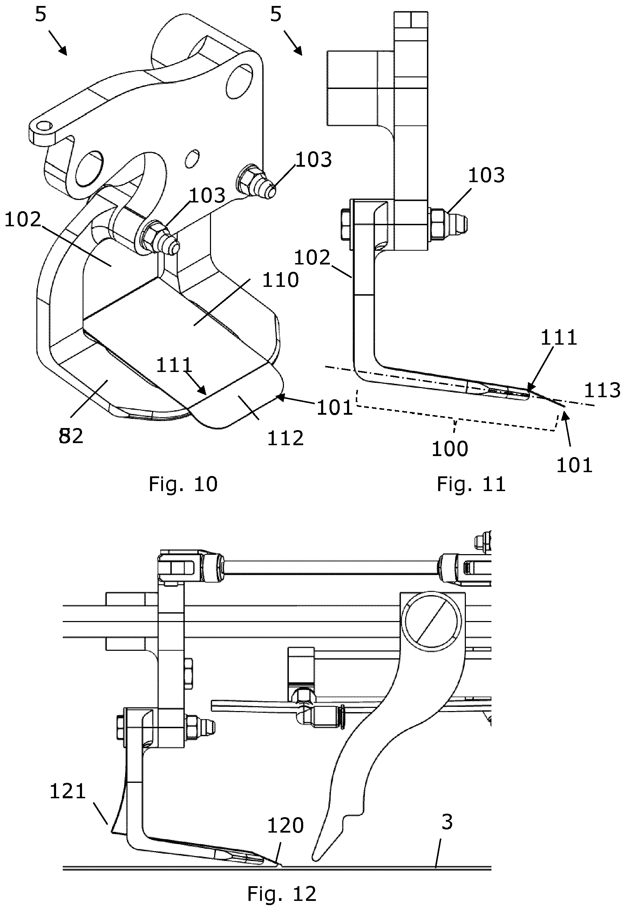

A lateral scraper section 100 (illustrated with a dashed parenthesis in Fig. 11) of the scraper extends partly along the upper surface of the foot portion and defines a leading edge 101 ahead of the forward edge 7 meaning that the forward edge is located between the shaft portion 80 and the leading edge 101 in the inwards direction. One jaw member with a scraper is illustrated in Fig. 10

The scraper defines an upright section 102 extending in the upright direction from the interface, i.e. the bolts 103 to the lateral scraper section 100. The distance between the interface and the foot is like the length of the foot.

In use, the scraper is slidable against a surface of the foot. During this movement, the scraper deflects in the upright section such that the transition between the upright section and the lateral scraper section bends laterally backwards. The scraper is made from a plate of a sheet material, particularly, it could be a sheet of steel material and the deflection could be during elastic deformation of the scraper.

As best seen in Figs. 10 and 11, the lateral scraper section 100 defines an inward section 110 extending in the inwards direction above the upper surface 82 of the foot. The lateral scraper section comprises a transition in the form of a bend 111 separating the inward section 110 from a downward section 112. The downward section extends from the inward section to the leading edge and extends across a plane defined by the foot and illustrated by the dotted line 113. The leading edge and the inward section are thereby on opposite sides of the plane, and the leading edge is below the lower surface of the foot when seen in a projection onto a vertical plane.

The forward edge is arranged to move the leading edge in the upright direction in response to the sliding of the downward section against the forward edge. This is illustrated in Fig. 12. The leading edge 101 of the scraper hits the bump 120 on the support surface 3 and the scraper deflects backwards. This is particularly made possible by the upright section deflecting backwards as illustrated by the displaced corner point 121. In Fig. 12 it is clearly seen that when the scraper deflects in this way, the leading edge must be lifted when the downward section slides against the forward edge of the foot portion of the jaw member.

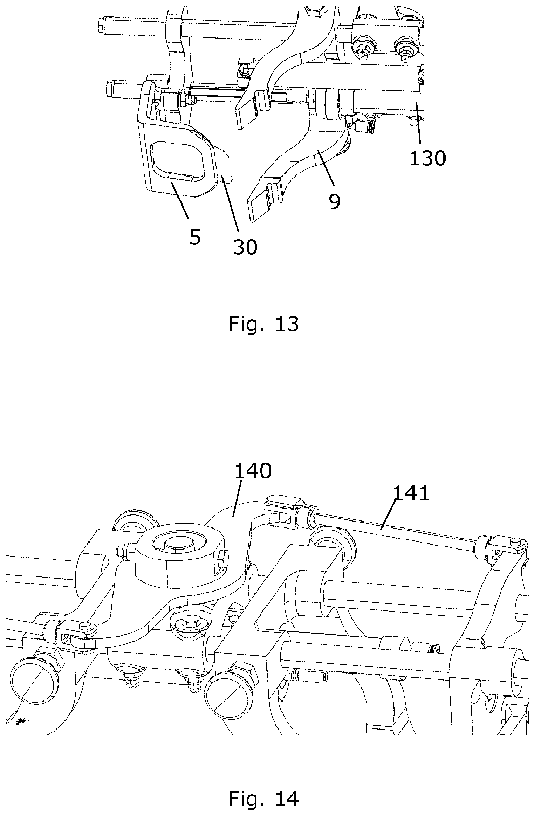

Fig. 13 illustrates details of an actuator 130 connected between the guard 9 and the jaw member 5. The actuator is movable to move the jaw member between the open and closed jaw positions.

Fig. 14 illustrates further details of the gripper including a rotational link 140 attached rotationally to the base and connected to each jaw member by connecting rods 141 to thereby synchronize the movement of one jaw member with movement of the other jaw member.

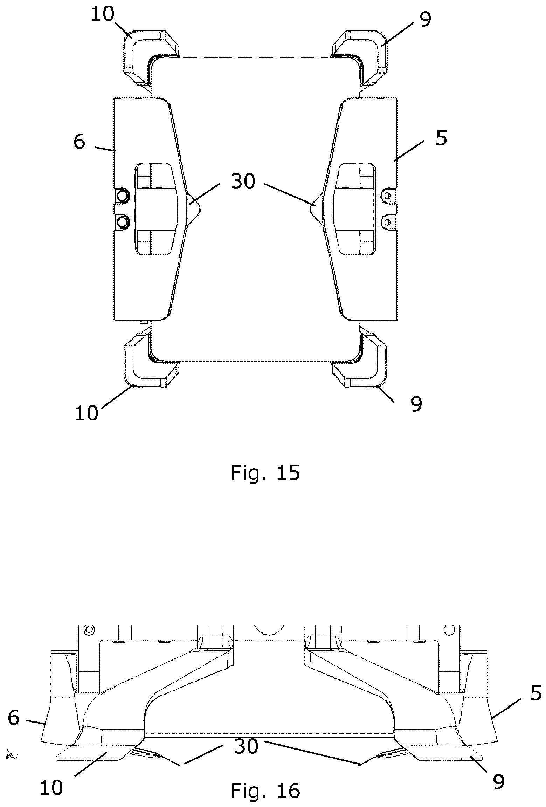

The guard structure may define contact surfaces which are arranged for contact with two sets of diametrically opposite sides of a plate shaped element which is being picked up. This may be useful e.g. when handling cardboard plates for food. Figs. 15 and 16 illustrate such a gripper where the first guard 9 and the second guard 10 are made as corner fitting elements arranged at opposite corners of the plate shaped element which is being picked up. The jaw members may not necessarily pinch the plate shaped element but may just lift the element upwards from the surface where it is carried until it is located between the corner fitting elements.

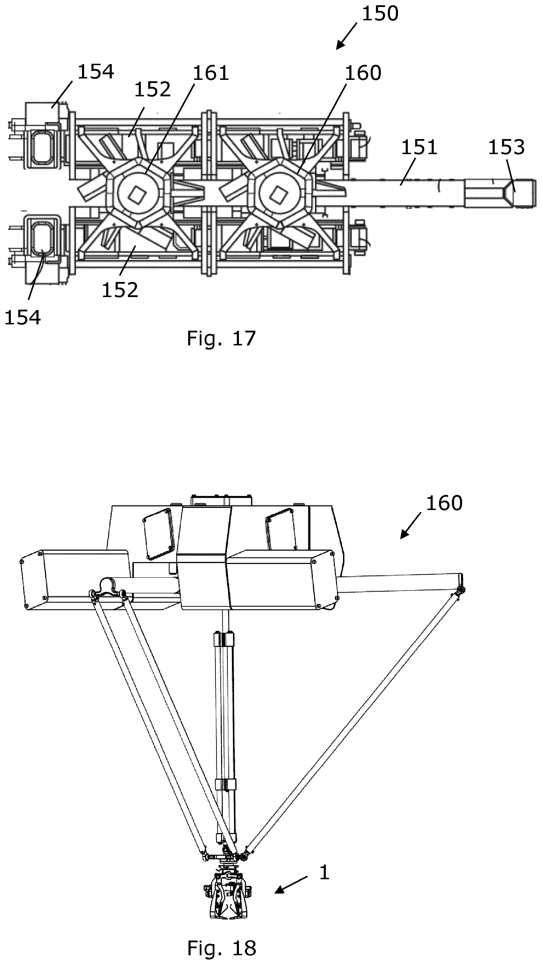

Fig. 17 illustrates a process line 150 in a food processing facility. The food processing line comprises a conveyor belt comprising an inlet section 151 and two outlet sections 152. The conveyors form support surfaces and carry the items from the inlet 153 to the outlets 154 of the process line. A robot station including two robots 160, 161 each having a gripper, is arranged between the inlet and the outlet and handles the food items, and more particularly moves the food items from the inlet section 151 to one of the outlet sections 152.

The robot 160 is a tripod or delta kinematic robot and it is fitted with a gripper 1 of the above explained kind. The Robot with the gripper is illustrated in Fig. 18.

## Claims

1. A gripper (1) for gripping an item (2), the gripper (1) comprising:
- a base (4),
- a first jaw member (5) and a second jaw member (6), each jaw member defining a shaft portion (30) and a foot portion (31), the shaft portion extending in an upright direction between the base and the foot portion, and the foot portion extending laterally from the shaft portion towards the foot portion of the other jaw member, the foot portion having an upper surface towards the base and an opposite lower surface facing away from the base, the upper and lower surfaces terminating in a forward edge (7,8), at least one jaw member being movable relative to the other jaw member to define an open jaw position and a closed jaw position, wherein the forward edges (7,8) are closer to each other in the closed jaw position than in the open jaw position, and
- a scraper (30) attached to each of the first and second jaw members, the scraper being attached to the shaft portion at a scraper interface and defines a lateral section extending partly along the upper surface of the foot portion and defining a leading edge ahead of the forward edge.

2. The gripper according to claim 1, wherein the scraper defines an upright section extending in an upright direction from the interface to the lateral section.

3. The gripper according to any of the preceding claims, wherein the scraper is movable relative to the foot portion.

4. The gripper according to claim 3, wherein the scraper is movable by deflection of the upright section.

5. The gripper according to claim 4, wherein the deflection causes elastic deformation of the scraper.

6. The gripper according to any of the preceding claims, wherein the lateral section defines an inward section extending in the inwards direction above the upper surface of the foot, and a downward section extending from the inward section to the leading edge, and wherein the leading edge is below the lower surface of the foot.

7. The gripper according to claim 6, wherein the inward section and the downward section are joined in a bend portion of the lateral section.

8. The gripper according to claim 6 or 7, wherein the forward edge is arranged to move the leading edge in the upright direction in response to the sliding of the downward section against the forward edge.

9. The gripper according to any of the preceding claims, wherein the scraper is made from a blank of a sheet material.

10. The gripper according to any of the preceding claims, comprising a guard structure comprising a first guard (9) and a second guard (10) extending in the upright direction between a free end (11) and the base (4) and each forming a contact surface (12) facing a contact surface (12) of the other guard, wherein the jaw members are arranged, in response to movement to the closed jaw position, to lift the item in the upright direction to a position located between the contact surfaces of the guards.

11. The gripper according to claim 10, wherein each jaw member defines an inner surface (13) facing an inner surface (13) of the other jaw member and wherein the inner surfaces, by movement of the jaw members from the open jaw position to the closed jaw position, move from a distal position where a distance between the inner surfaces exceeds a distance between the contact faces, to a proximal position where the distance between the contact faces exceeds the distance between the inner surfaces.

12. A robot for moving an item, the robot comprising a gripper according to any of claims 1-10 and being programmed to move to a pickup location of a support surface where the scraper reaches the surface and the foot portion does or does not reach the support surface.

13. A method of moving an item by use of a robot comprising a gripper according to any of claim 1-10, the method comprising:
- moving at least one of the jaw members relative to the other jaw member to the open jaw position,
- moving the gripper to a position where the item is located between the leading edges,
- moving the jaw members towards the closed jaw position until the item is lifted by the scraper and the foot portion of the jaw members, and
- moving the gripper by use of the robot.

14. The method according to claim 13, wherein the item comprises a cardboard plate with an edge extending about a lower surface and an opposite upper surface, the upper surface carrying food items.

15. The method according to claim 14, wherein the gripper is in contact with the lower surface and the edge, and not in contact with the upper surface and the food items.
